# EUROPEAN PATENT APPLICATION

(11) **EP 4 745 009 A1**
(43) Date of publication of application: **20.05.2026**
(21) Application number: 25207721.9
(22) Date of filing: 09.10.2025
(51) Int. Cl.: B62D 21/11, B62D 25/08, B62D 25/20, B62D 21/09

(54) **SUSPENSION MEMBER, SUSPENSION MEMBER ASSEMBLY, AND VEHICLE REAR STRUCTURE**

(30) Priority: 14.11.2024 JP 2024198720
(71) Applicant: TOYOTA JIDOSHA KABUSHIKI KAISHA, Toyota-shi, Aichi-ken 471-8571 (JP)
(72) Inventor: ITO, Takahiro, TOYOTA-SHI, AICHI-KEN, 471-8571 (JP)
(74) Representative: Cabinet Beau de Loménie

(57) **Abstract**

A suspension member (30) is integrally molded by casting and mounted on a rear part of a vehicle body (200). The suspension member (30) includes left and right side beams (31L, 31R); a first cross member (32) connecting, in a vehicle width direction, vehicle body mounting portions (36L, 36R) of the respective left and right side beams (11L, 11R); and a second cross member (33) disposed further frontward of the vehicle relative to the first cross member (32) and connecting the left and right side beams (31L, 31R) in the vehicle width direction. The first cross member (32) has a groove shape with a rear side being open, and the second cross member (33) has a groove shape with a lower side being open.

## Description

### CROSS REFERENCE TO RELATED APPLICATION

This application claims priority to Japanese Patent Application No. 2024-198720 filed on November 14, 2024, which is incorporated herein by reference in its entirety including the specification, claims, drawings, and abstract and to which the person of the art can refer when considering the present disclosure.

### TECHNICAL FIELD

The present disclosure relates to a suspension member of a vehicle, a structure of a suspension member assembly, and a vehicle rear structure including a suspension member.

### BACKGROUND

JP 2023-153497 A discloses a hollow suspension member having a continuous rectangular frame shape that is produced by casting using a core. A suspension member having a hollow configuration may suffer from insufficient stiffness in a portion that receives a large load from a suspension arm, for example, connected with a wheel carrier. Therefore, the suspension member disclosed in JP 2023-153497 A includes therein a reinforcing member.

### SUMMARY

A suspension member having a rectangular frame shape may have a deformation mode that causes the entire suspension member to be bent due to a load applied from a coil spring and other components. It is therefore necessary to increase the bending stiffness of not only the portion where load is input but also the entire suspension member.

The suspension member having a hollow structure as disclosed in JP 2023-153497 A, however, may have difficulty in increasing the bending stiffness for the entire member even with a reinforcing member disposed therein, thereby leaving room for improvement.

The present disclosure is therefore aimed toward increasing the stiffness of a suspension member that is integrally molded by casting.

In accordance with an aspect of the disclosure, a suspension member is integrally molded by casting, and mounted on a rear part of a vehicle body. The suspension member includes: left and right side beams disposed on opposite side portions of a vehicle, respectively, and extending along a length of the vehicle; a first cross member connecting, in a vehicle width direction, vehicle body mounting portions of the respective left and right side beams; and a second cross member disposed further frontward of the vehicle relative to the first cross member and connecting the left and right side beams in the vehicle width direction. The first cross member has a groove shape with a rear side being open, or a gabled shape including a horizontal plate extending rearward of the vehicle and a vertical plate extending downward of the vehicle. The second cross member has a groove shape with a lower side being open.

The second cross member has a groove shape with the lower side being open, and has high lateral bending stiffness along a vehicle length. This configuration enables an increase in stiffness of the entire suspension member to thereby inhibit a deformation mode that causes bending of the entire suspension member.

In the suspension member of the disclosure, each of the left and right side beams includes an upper portion and a lower portion, and the lower portion is curved to protrude downward to create a space between the lower portion and the upper portion.

This configuration enables an increase in the vertical length of the entire side beam, thereby increasing the longitudinal bending stiffness of the side beams and enhancing stiffness of the entire suspension member.

In the suspension member of the disclosure, the upper portion has a groove shape with an outward side in the vehicle width direction being open.

This configuration enables an increase in the bending stiffness of the upper portion in the longitudinal direction.

In the suspension member of the disclosure, the lower portion has a groove shape with a lower side being open.

This configuration enables an increase in the lateral bending stiffness of the lower portion in the vehicle width direction.

In the suspension member of the disclosure, the second cross member may include a lower arm mounting portion to which a suspension lower arm is attached.

This configuration enables the second cross member to receive a load from the coil spring that is applied via the suspension lower arm. The second cross member has a groove shape with the lower side being open, and has high lateral bending stiffness in the vehicle length direction. This inhibits a deformation mode that causes bending of the entire suspension member.

The suspension member assembly of the disclosure may include the suspension member described above, and an assembling member configured to connect the first cross member and the second cross member.

The assembling member enables the first cross member and the second cross member to be integral, to thereby increase stiffness of the suspension member assembly.

In the suspension member assembly of the disclosure, the assembling member may be configured to connect opposite end portions of the first cross member in the vehicle width direction on a vehicle forward side with opposite end portions of the second cross member in the vehicle width direction on a vehicle rearward side.

As described above, the assembling member connects the opposite end portions of the first and second cross members. This configuration enables an increase in the torsional stiffness of the suspension member assembly.

In the suspension member assembly of the disclosure, the assembling member may be a plate-like member or may be composed of a plurality of brace members crossing each other to connect the opposite end portions of the first and second cross members in the vehicle width direction

This enables an increase in the torsional stiffness of the suspension member assembly with a simple configuration.

In the suspension member assembly of the disclosure, the assembling member may be an on-vehicle component.

The use of an on-vehicle component increases the torsional stiffness of the suspension member assembly and reduces the number of components.

In the suspension member assembly of the disclosure, the on-vehicle component may be dynamic rear steering.

Use of the on-vehicle component increases the torsional stiffness of the suspension member assembly and reduces the number of components.

The suspension member assembly of the disclosure may include an assembling member configured to connect the first cross member and the second cross member. The second cross member may extend from undersurfaces of the respective left and right side beams and have a U-shape protruding downward. The assembling member may be configured to connect first and second end portions on a forward face of the first cross member with second and first end portions on a rearward face of the second cross member.

This configuration enables the first cross member and the second cross member to be vertically integral to thereby increase the torsional stiffness of the suspension member assembly.

In accordance with another aspect, a vehicle rear structure may include the suspension member described above; a rear unit including left and right rear side member portions disposed on a rear part of the vehicle and extending along a vehicle length; and left and right crash boxes mounted on respective rear ends of the left and right rear side member portions and extending rearward of the vehicle, with rearward end portions of the respective left and right side beams being positioned further rearward of the vehicle relative to front end portions of the crash boxes.

This configuration enables the rearward end portions of the side beams, along with the crash boxes, to absorb an impulsive force in the event of rear collision, thereby increasing impact load absorption performance.

In the vehicle rear structure of the disclosure, stabilizer supports may be disposed on undersurfaces of the rearward end portions of the left and right side beams, respectively.

This configuration allows use of the rearward end portions of the side beams as the stabilizer supports, as described above, to thereby reduce the number of components.

The present disclosure increases stiffness of the suspension member that is integrally molded by casting.

### BRIEF DESCRIPTION OF DRAWINGS

Embodiments of the present disclosure will be described based on the following figures, wherein:
FIG. 1 is a bottom view of a vehicle rear portion where a suspension member according to an embodiment is mounted;
FIG. 2 is a perspective view of the suspension member according to the embodiment when viewed from a diagonally upper rear direction;
FIG. 3 is a perspective view of the suspension member according to the embodiment when viewed from a diagonally lower rear direction;
FIG. 4 is a schematic cross sectional view of the suspension member illustrated in FIG. 2, taken along line A-A in FIG. 2;
FIG. 5 is a schematic cross sectional view of the suspension member illustrated in FIG. 2, taken along line B-B in FIG. 2;
FIG. 6 is a schematic elevation of a suspension member assembly according to an embodiment, when viewed from rearward of the vehicle;
FIG. 7 is an explanatory view indicating bending moment applied to side beams and a second cross member when a load is applied from a coil spring in the vehicle length direction;
FIG. 8 is an explanatory view showing a mold for use in molding a lower portion of the side beam by casting and indicating the draw direction;
FIG. 9 is an explanatory view showing a mold for use in molding a lower portion of the side beam by casting and indicating the draw directions, including an upper view showing a cross section taken along a line C-C in FIG. 8 and a lower view showing a cross section taken along a line D-D in FIG. 8;
FIG. 10 is an explanatory view showing a mold for use in molding a front cross member by casting and indicating the draw direction; and
FIG. 11 is a schematic cross sectional view illustrating a suspension member assembly according to another embodiment.

### DESCRIPTION OF EMBODIMENTS

A suspension member 30 according to an embodiment will be described below. First, a vehicle 100 to which the suspension member 30 is to be mounted will be described. In each figure, symbols FR, UP, and RH indicate frontward, upward, and rightward of the vehicle 100, respectively, to which the suspension member 30 is mounted. The directions opposite to the directions FR, UP, and RH indicate rearward, downward, and leftward, respectively. In the following description, simple indication of frontward and rearward, leftward and rightward, and upward and downward refers to frontward and rearward, leftward and rightward, and upward and downward with respect to the vehicle 100, respectively, unless otherwise specified. Also, front and rear, left and right, and above and below with respect to the vehicle 100 correspond to front and rear, left and right, and above and below with respect to the suspension member 30.

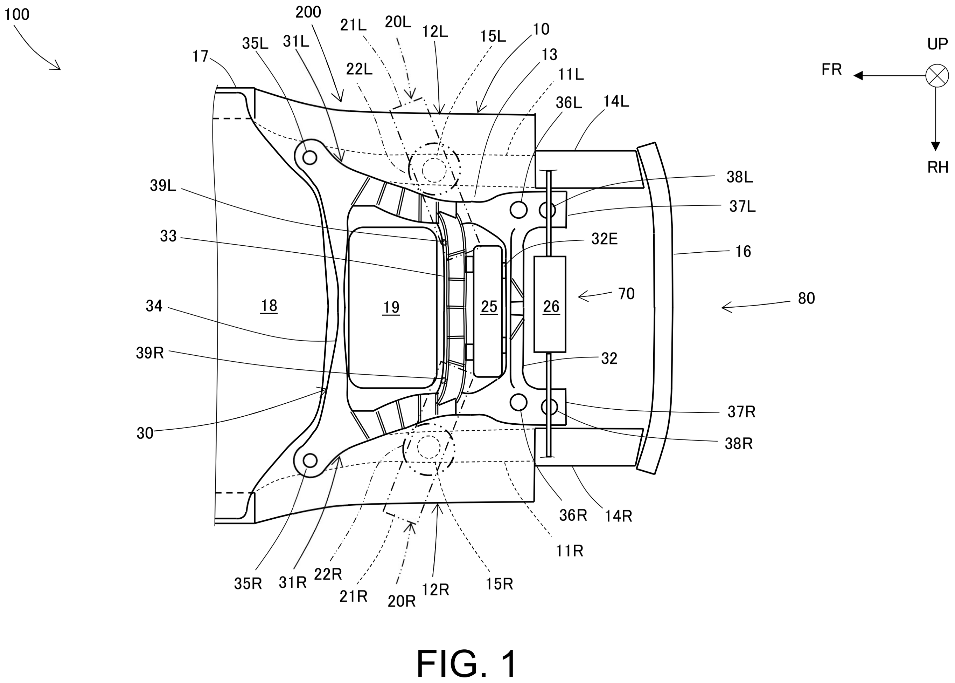

As illustrated in FIG. 1, the vehicle 100 includes a vehicle body 200, and a suspension member 30 that is mounted on a rear portion of the vehicle body 200.

As illustrated in FIG. 1, the vehicle body 200 includes a rear unit 10, a center unit 17, and a front unit (not shown). The rear unit 10 constitutes the rear portion of the vehicle body 200, the center unit 17 constitutes a center portion of the vehicle body 200, and the front unit (not shown) constitutes a front portion of the vehicle body 200. Each of the rear unit 10, the center unit 17, and the front unit is a die-cast product produced by integral casting. A front driving device of the vehicle 100 is mounted on the front unit.

The rear unit 10 includes left and right rear side member portions 11L and 11R, left and right rear wheel house portions 12L and 12R, and a rear floor portion 13.

The left and right rear side member portions 11L and 11R are frame portions disposed on left and right sides of the rear unit 10, respectively, and extending in the front-rear direction or along the length of the vehicle. The rear side member portions 11L and 11R may each have a groove shape with the outward side in the vehicle left-right or width direction being open, and include a plurality of reinforcing ribs. The left and right rear side member portions 11L and 11R include coil spring mounts 15L and 15R for holding the upper ends of coil springs 22L and 22R, respectively. Left and right crash boxes 14L and 14R are attached to the rear ends of the left and right rear side member portions 11L and 11R, respectively. A rear bumper reinforcing member 16 is attached to the rear ends of the left and right crash boxes 14L and 14R. The rear bumper reinforcing member 16 is a frame member that connects the rear ends of the left and right crash boxes 14L and 14R in the vehicle width direction.

The left and right rear wheel house portions 12L and 12R are arc-shape plate members having a semi-circular cross section connecting with the outward sides of the left and right rear side member portions 11L and 11R, respectively, in the vehicle width direction. The left and right rear wheel house portions 12L and 12R accommodate rear wheels, respectively.

The rear floor portion 13 is a plate member that connects the left and right rear side member portions 11L and 11R.

The center unit 17 is connected with the front part of the rear unit 10 in the vehicle via bolts or through welding, for example. A cabin (not shown) is disposed above the center unit 17. A battery pack 18 is mounted on the center unit 17. As illustrated in FIG. 1, a center part of the battery pack 18 in the vehicle width direction protrudes rearward toward the suspension member 30. This protruding portion may contain auxiliary machine of the battery pack 18, including a joint box and an ECU, for example.

The suspension member 30 is integrally molded by casting, and is mounted under the rear unit 10 of the vehicle body 200. The suspension member 30 is a rectangular frame member including left and right side beams 31L and 31R, a first cross member 32 at the rear, a second cross member 33, and a front cross member 34 at the front.

The left and right side beams 31L and 31R are disposed on left and right sides of the vehicle 100, respectively, and extend in the front-rear direction or along the length of the vehicle. Left and right front vehicle body mounting portions 35L and 35R are attached, with mount members, under the left and right rear side member portions 11L and 11R, respectively, at the front ends of the left and right side beams 31L and 31R. Further, left and right rear vehicle body mounting portions 36L and 36R are attached, with mount members, under the rear unit 10 in the rearward portions of the left and right side beams 31L and 31R, respectively. The left and right side beams 31L and 31R further have left and right rearward end portions 37L and 37R that extend rearward of the vehicle from the rear vehicle body mounting portions 36L and 36R, respectively. The left and right rearward end portions 37L and 37R are located further rearward of the vehicle relative to the forward end portions of the left and right crash boxes 14L and 14R, respectively. Left and right stabilizer supports 38L and 38R for supporting a stabilizer 26 are disposed on the undersurfaces of the left and right rearward end portions 37L and 37R, respectively.

The front cross member 34 extends along the vehicle width between the left and right front vehicle body mounting portions 35L and 35R. The first cross member 32 at the rear extends along the vehicle width between the left and right rear vehicle body mounting portions 36L and 36R. The second cross member 33 connects the left and right side beams 31L and 31R along the vehicle width in a region further forward relative to the first cross member 32. As will be described below, the second cross member 33 extends from the undersurfaces of the left and right side beams 31L and 31R, respectively, and has a downwardly protruding U-shape. The second cross member 33 includes, at the left and right ends portions, left and right lower arm mounting portions 39L and 39R to which the suspension lower arms 21L and 21R are attached, respectively.

A rear wheel driving device 19 is mounted between the front cross member 34 and the second cross member 33 of the suspension member 30. A dynamic rear steering 25 is mounted between the second cross member 33 and the first cross member 32. The dynamic rear steering 25 is a system for steering the rear wheels. Specifically, the dynamic rear steering 25 is an on-vehicle component that steers the rear wheels in the opposite direction to the front wheels at low and middle speeds and steers the rear wheels in the same direction as the front wheels at high speeds, for example.

The suspension member 30 and the dynamic rear steering 25 constitute a suspension member assembly 70. Further, the suspension member 30, the rear unit 10 including the left and right rear side member portions 11L and 11R, and the left and right crash boxes 14L and 14R constitute a vehicle rear structure 80.

A plurality of arms of left and right suspension systems 20L and 20R that suspend left and right rear wheels are connected to the suspension member 30. The suspension systems 20L and 20R are each composed of a plurality of arms that connect left and right rear wheel knuckles, respectively, with the suspension member 30, the coil springs 22L and 22R, and left and right shock absorbers (not shown). End portions of the left and right suspension lower arms 21L and 21R, adjacent to the vehicle body, are connected with the left and right lower arm mounting portions 39L and 39R, respectively, of the second cross member 33. The left and right coil springs 22L and 22R are mounted on top of the left and right suspension lower arms 21L and 21R, respectively. Upper edges of the left and right coil springs 22L and 22R are retained with the coil spring mounts 15L and 15R of the left and right rear side member portions 11L and 11R, respectively. The arms other than the left and right suspension lower arms 21L and 21R are neither shown nor described.

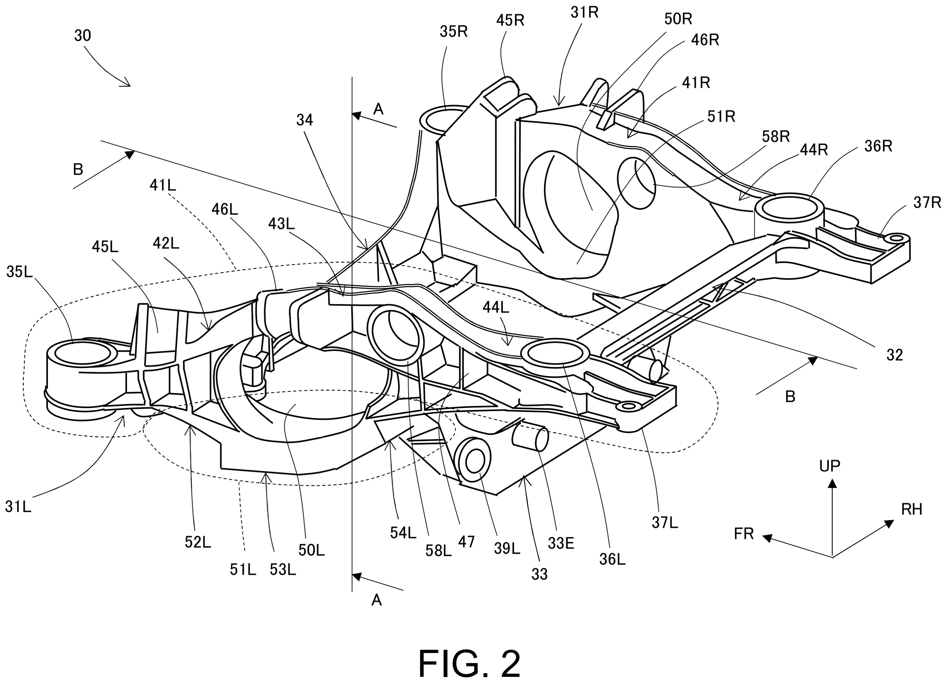

With reference to FIG. 2 to FIG. 5, the structure of the suspension member 30 will be described in detail below.

As described above with reference to FIG. 1, the suspension member 30 is a rectangular frame member including the left and right side beams 31L and 31R, the first cross member 32 at the rear, the second cross member 33, and the front cross member 34 at the front.

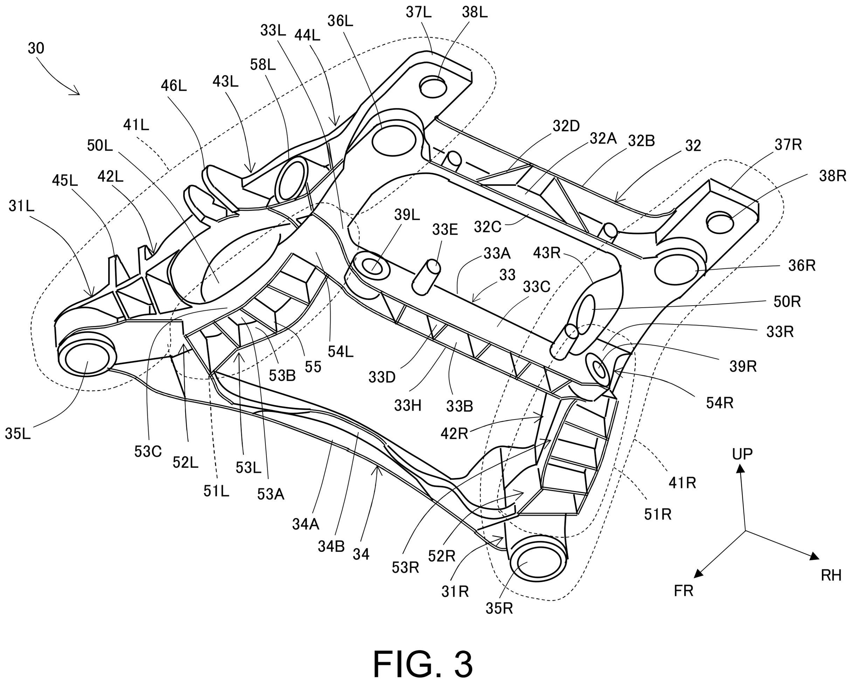

As illustrated in FIG. 2 and FIG. 3, the left side beam 31L includes an upper portion 41L and a lower portion 51L. The lower portion 51L is curved to protrude downward to allow creation of a space 50L between the lower portion 51L and the upper portion 41L.

The upper portion 41L includes a forward portion 42L, a center portion 43L, a rearward portion 44L, and a rearward end portion 37L. The forward portion 42L extends diagonally upward in the vehicle rearward direction from a left front vehicle-body mounting portion 35L. The center portion 43L is connected to the rear end of the forward portion 42L and is curved to protrude upward, with a rear portion thereof extending horizontally toward the rear of the vehicle. The rearward portion 44L is connected to the rear end of the center portion 43L and extends horizontally toward the rear of the vehicle to a rear vehicle-body mounting portion 36L. As described above, the left rearward end portion 37L extends horizontally from the left rear-vehicle body mounting portion 36L toward the rear of the vehicle.

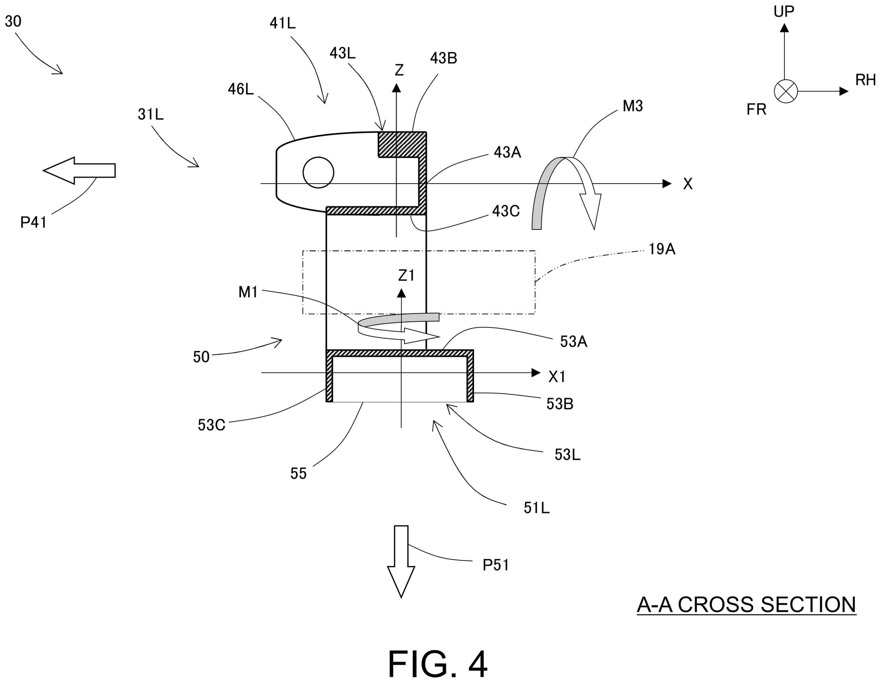

As illustrated in FIG. 4, the center portion 43L is composed of a web 43A, an upper flange 43B, and a lower flange 43C, and has a groove shape with the outward side in the vehicle width direction (vehicle left side) being open. The forward portion 42L and the rearward portion 44L similarly have a groove shape with the outward side in the vehicle width direction (vehicle left side) being open. The forward portion 42L and the rearward portion 44L have planar rib plates 47 extending along the vehicle width (toward the left of the vehicle).

Arm coupling portions 45L and 46L to which the arms of the left suspension system 20L are coupled are disposed on top of the forward portion 42L and on top of the center portion 43L, respectively. A mount attaching portion 58L to which the mount of the driving device 19 is attached is disposed in a rearward portion of the center portion 43L.

The left lower portion 51L includes a front end portion 52L, a rear end portion 54L, and a curved portion 53L. The front end portion 52L is connected to the underside of the forward portion 42L of the upper portion 41L. The rear end portion 54L is connected to the underside of the rearward portion 44L of the upper portion 41L. The curved portion 53L is curved to protrude downward between the front end portion 52L and the rear end portion 54L. The top face of the curved portion 53L and the undersurface of the center portion 43L of the upper portion 41L create the cylindrical space 50L therebetween. As illustrated in FIG. 4, a drive shaft 19A passes through the space 50L in the vehicle width direction.

As illustrated in FIG. 3 and FIG. 4, the curved portion 53L of the lower portion 51L is composed of a web 53A, an inner flange 53B, and an outer flange 53C, and has a groove shape with the lower side being open. The front end portion 52L and the rear end portion 54L similarly have a groove shape with the lower side being open. The front end portion 52L, the curved portion 53L, and the rear end portion 54L include a plurality of planar rib plates 55 extending along the vehicle height.

The right side beam 31R has line symmetry with respect to the left side beam 31L, and includes an upper portion 41R and a lower portion 51R. The upper portion 41R includes a forward portion 42R, a center portion 43R, a rearward portion 44R, and a rearward end 37R, and has arm coupling portions 45R and 46R, and a mount attaching portion 58R. The lower portion 51R includes a front end portion 52R, a rear end portion 54R, and a curved portion 53R.

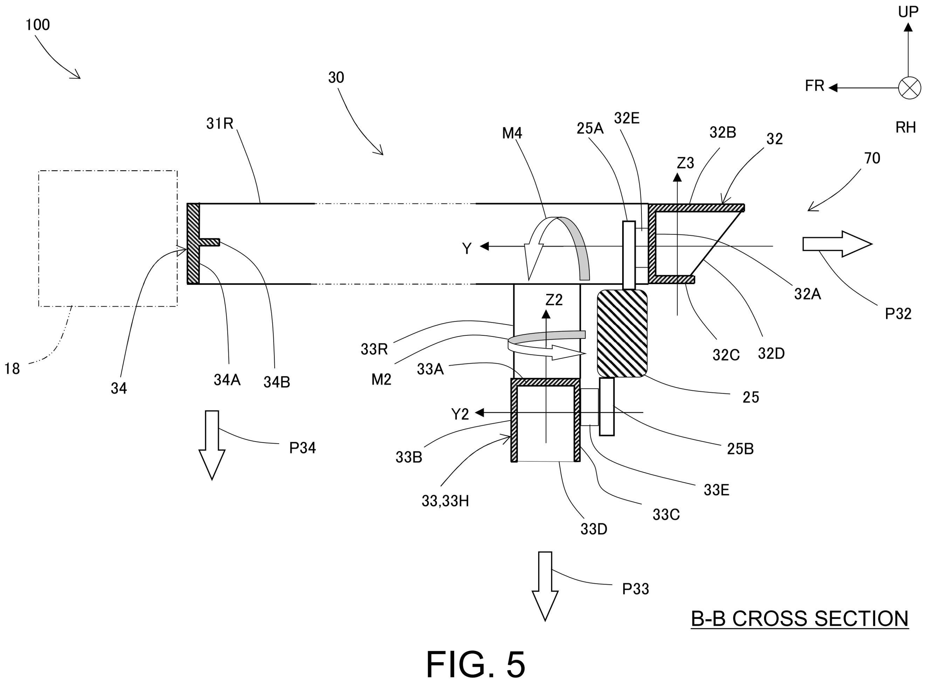

As illustrated in FIG. 3 and FIG. 5, the front cross member 34 has a T-shaped cross section including a flat plate 34A and a horizontal rib 34B.

As illustrated in FIG. 3 and FIG. 5, the first cross member 32 is composed of a web 32A, an upper flange 32B, and a lower flange 32C, and has a groove shape with the rear side being open. The first cross member 32 further includes a rib plate 32D extending rearward of the vehicle from the web 32A. A device attaching mount 32E to which an upper portion of the dynamic rear steering 25 is attached is disposed on a front face of the web 32A of the first cross member 32.

The second cross member 33 extends downward from the undersurfaces of the rear end portions 54L and 54R of the left and right lower portions 51L and 51R, respectively, and connects the left and right side beams 31L and 31R in the vehicle width direction. The second cross member 33 is composed of a left end portion 33L, a right end portion 33R, and a horizontal portion 33H. The left end portion 33L and the right end portion 33R extend downward from the undersurfaces of the rear end portions 54L and 54R, respectively. The horizontal portion 33H connects the left end portion 33L and the right end portion 33R along the vehicle width. The left end portion 33L, the right end portion 33R, and the horizontal portion 33H have a downwardly protruding U shape.

The horizontal portion 33H is composed of a web 33A, a front flange 33B, and a rear flange 33C, and has a groove shape with the lower side being open. The horizontal portion 33H includes rib plates 33D extending downward from the web 33A. The horizontal portion 33H includes, at left and right end portions, left and right lower arm mounting portions 39L and 39R, respectively. The left and right lower arm mounting portions 39L and 39R are through-holes extending through the horizontal portion 33H along the vehicle length. The second cross member 33 further includes, at left and right end portions on the rear face of the rear flange 33C, device attaching mounts 33E to which the lower portion of the dynamic rear steering 25 is attached.

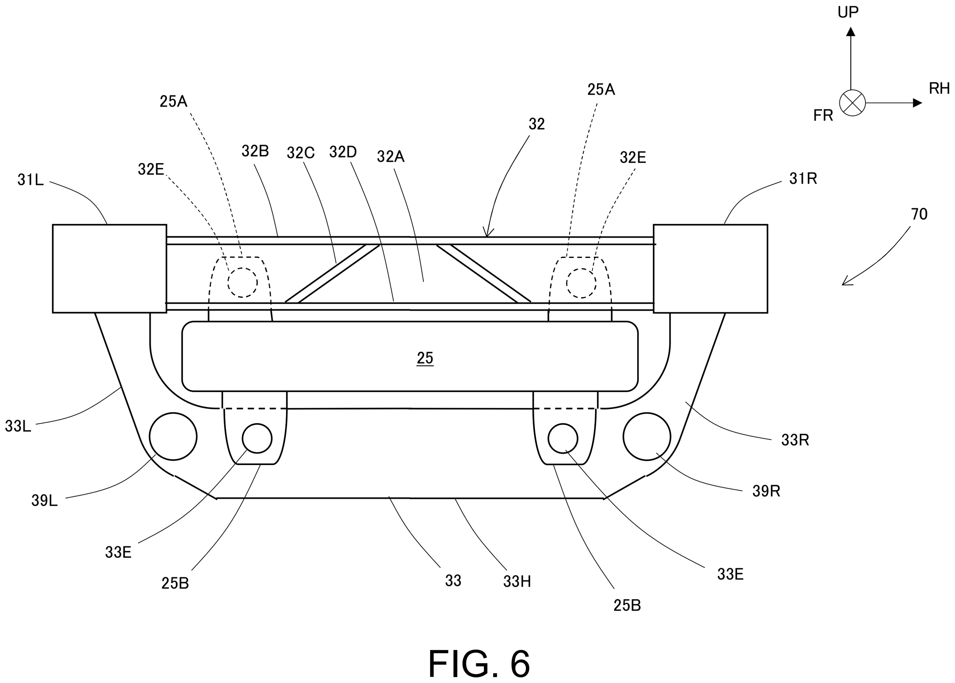

As illustrated in FIG. 5 and FIG. 6, the dynamic rear steering 25 is an assembling member of the suspension member assembly 70, and is attached to the device attaching mounts 32E and 33E to connect the first cross member 32 and the second cross member 33. As illustrated in FIG. 5 and FIG. 6, the dynamic rear steering 25 includes left and right upper brackets 25A and left and right lower brackets 25B. The left and right upper brackets 25A are secured to the left and right device attaching mounts 32E of the first cross member 32 via bolts. The left and right lower bracket 25B are secured to the device attaching mounts 33E of the second cross member 33 via bolts. Thus, the dynamic rear steering 25 connects the forward face of the first cross member 32 with the rearward face of the second cross member 33 in the vehicle height direction. The dynamic rear steering 25 further connects the left end portion of the first cross member 32 with the right end portion of the horizontal portion 33H of the second cross member 33, and also connects the right end portion of the first cross member 32 with the left end portion of the horizontal portion 33H of the second cross member 33. As described above, the dynamic rear steering 25 connects the opposite widthwise end portions on the forward side of the first cross member 32 with the opposite widthwise end portions on the rearward side of the second cross member 33.

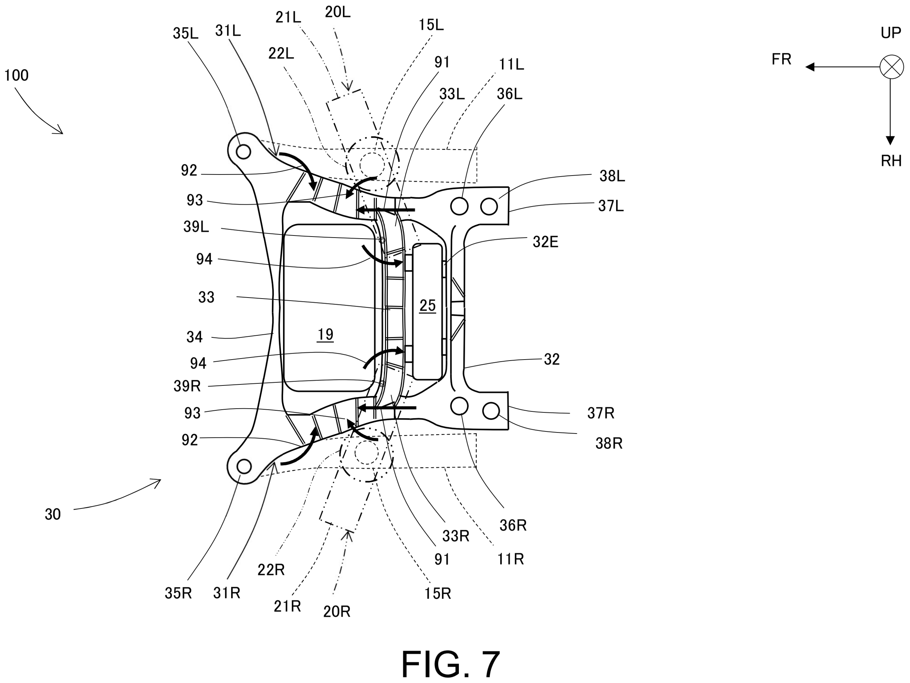

With further reference to FIG. 7, deformation of each part of the suspension member 30 when a load is applied to the suspension member 30 from the left and right coil springs 22L and 22R will be described.

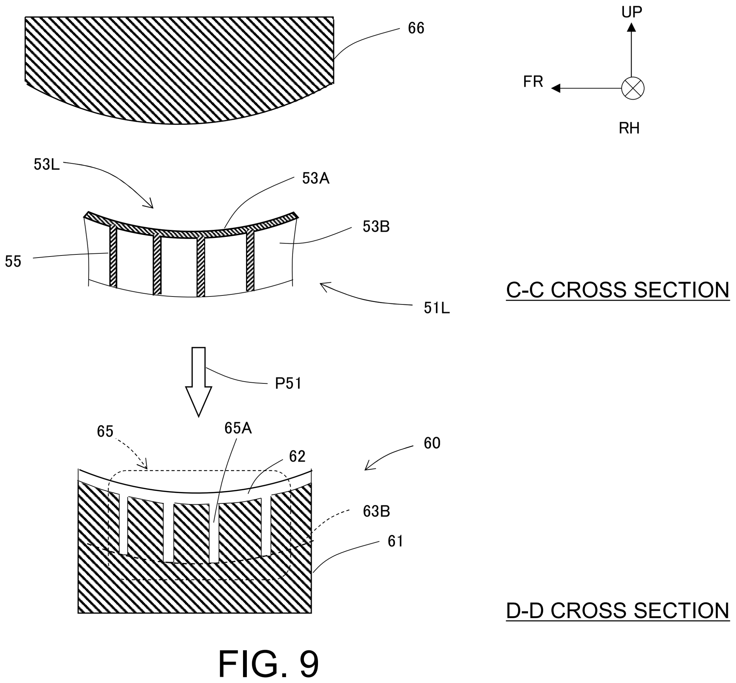

As indicated with arrows 91 in FIG. 7, a load directed forward of the vehicle from the left and right coil springs 22L and 22R is transmitted to the second cross member 33 via the suspension lower arms 21L and 21R and the left and right lower arm mounting portions 39L and 39R, respectively. The load is then transmitted from the left end portion 33L and the right end portion 33R of the second cross member 33 to the left and right side beams 31L and 31R, respectively. This forward load causes a bending moment indicated with arrows 92 and 93 in FIG. 9 to be applied to regions of the left and right side beams 31L and 31R located further forward with respect to the second cross member 33. This bending moment then causes the regions of the left and right side beams 31L and 31R located further forward with respect to the second cross member 33 to bend, to thereby protrude inward in the vehicle width direction. Bending of the left and right side beams 31L and 31R further causes a bending moment indicated by arrow 94 in FIG. 9 to be applied to the second cross member 33. This bending moment causes the center portion of the second cross member 33 in the vehicle width direction to be curved to protrude rearward of the vehicle.

The bending moment applied to the left side beam 31L is a moment M1 about the Z1 axis shown in FIG. 4. The curved portion 53L has a groove shape with the lower side being open, and has bending stiffness about the Z1 axis that is higher than the bending stiffness about the X1 axis. The Z1 axis is a coordinate axis passing through the center of the cross section of the curved portion 53L along the vehicle height, and the X1 axis is a coordinate axis passing through the cross section of the curved portion 53L along the vehicle width. Therefore, the moment applied to the left side beam 31L by the coil spring 22L is resisted by the bending stiffness about the Z1 axis of the curved portion 53L. This reduces bending deformation of the left side beam 31L caused by the load applied from the coil spring 22L.

Further, the bending moment applied to the second cross member 33 is a moment M2 about the Z2 axis shown in FIG. 5. Similar to the curved portion 53L, the second cross member 33 has a groove shape with the lower side being open, and has bending stiffness about the Z2 axis that is higher than the bending stiffness about the Y2 axis. The Z2 axis is a coordinate axis passing through the center of the cross section of the second cross member 33 along the vehicle height, and the Y2 axis is a coordinate axis passing through the cross section of the second cross member 33 along the vehicle length. Therefore, the bending moment applied to the second cross member 33 by the coil spring 22L is resisted by the bending stiffness about the Z2 axis of the second cross member 33, which reduces bending deformation of the second cross member 33 caused by the load applied from the coil spring 22L.

Meanwhile, a vertical load is applied to the suspension member 30 from the left and right suspension systems 20L and 20R. The left and right side beams 31L and 31R are each composed of the left and right upper portions 41L and 41R, and the left and right lower portions 51L and 51R having the corresponding spaces 50L and 50R being interposed between the lower portions 51L and 51R and the upper portions 41L and 41R, respectively. This configuration increases the vertical length of the entire left and right side beams 31L and 31R to thereby enhance the longitudinal bending stiffness of the left and right side beams 31L and 31R, and to increase the stiffness of the entire suspension member 30. Further, as illustrated in FIG. 4, the upper portions 41L and 41R have a groove shape with the outward side in the vehicle width direction being open, and therefore have bending stiffness about the X axis that is higher than the bending stiffness about the Z axis. The X axis is a coordinate axis passing through the center of the cross section of the upper portion 41L in the vehicle width direction, and the Z axis is a coordinate axis passing through the center of the cross section of the upper portion 41L in the vehicle height direction. The bending moment applied to the side beams 31L and 31R due to the vertical load from the left and right suspension systems 20L and 20R is a moment M3 about the X axis shown in FIG. 4. Therefore, the bending moment applied to the side beams 31L and 31R is resisted by the bending stiffness about the X axis of the upper portions 41L and 41R. Thus, the left and right side beams 31L and 31R have increased stiffness against longitudinal bending.

Further, as illustrated in FIG. 5, the first cross member 32 has a groove shape with the rearward side being open. Therefore, the first cross member 32 has bending stiffness about the Y axis that is higher than the bending stiffness about the Z3 axis, and has increased stiffness against longitudinal bending. This configuration enables the first cross member 32 to resist the moment M4 about the Y axis. Here, the Y axis is a coordinate axis passing through the center of the cross section of the first cross member 32 along the vehicle length, and the Z3 is a coordinate axis passing through the center of the cross section of the upper portion 41L along the vehicle height.

As described above, the suspension member 30 has a groove shape with the lower side being open, and includes the second cross member 33 having high lateral bending stiffness in the vehicle length direction. This configuration increases the stiffness of the entire suspension member 30 to thereby inhibit a deformation mode that causes bending of the entire suspension member 30.

The suspension member 30 further includes the left and right lower portions 51L and 51R having high lateral bending stiffness in the vehicle width direction, and the second cross member 33 having high lateral bending stiffness in the vehicle length direction. The left and right lower portions 51L and 51R and the second cross member 33 are integrally molded with the suspension member 30. This configuration reduces lateral bending deformation of the entire suspension member 30.

Further, the suspension member 30 includes the left and right side beams 31L and 31R having the left and right spaces 50L and 50R, respectively, and having a large vertical length and high longitudinal bending stiffness, and the first cross member 32 having a groove shape with the rear side being open and having high longitudinal bending stiffness. Further, the left and right side beams 31L and 31R and the first cross member 32 are integrally molded with the suspension member 30. This configuration reduces longitudinal bending deformation of the entire suspension member 30.

In the suspension member 30, the left and right side beams 31L and 31R further include the upper portions 41L and 41R, respectively, having a groove shape with the outward side in the vehicle width direction being open, and the first cross member 32 has a groove shape with the rear side being open. Further, the lower portions 51L and 51R of the left and right side beams 31L and 31R, respectively, and the second cross member 33 have a groove shape with the lower side being open. This configuration provides draw directions in the outward in the vehicle width direction, the vehicle rearward direction, and the vehicle downward direction, to thereby enable integral molding of the suspension member 30 by casting.

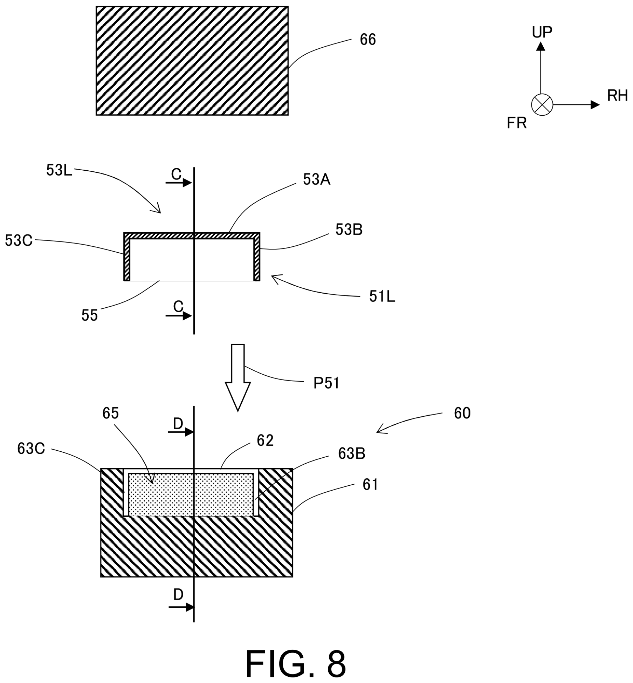

The molds and the draw directions in integrally molding the suspension member 30 by casting will be described in detail below. First, with reference to FIG. 8 and FIG. 9, a mold 60 and the draw direction for molding the lower portion 51L of the left side beam 31L by casting will be described. As illustrated in FIG. 8 and FIG. 9, the mold 60 is composed of a lower mold 61 and an upper mold 66. The lower mold 61 includes a recess 62 for molding the web 53A of the lower portion 51L, longitudinal grooves 63B and 63C for forming the inner flange 53B and the outer flange 53C, and a groove set 65 for molding the rib plate 55. As illustrated in FIG. 9, the recess 62 and the longitudinal grooves 63B and 63C extend along the longitudinal direction of the lower portion 51L. Further, the groove set 65 is composed of a plurality of lateral grooves 65A extending in the width direction of the lower portion 51L to connect the longitudinal grooves 63B and 63C.

The upper mold 66 is to be assembled over the lower mold 61. Upon assembling the upper mold 66 with the lower mold 61, the recess 62, the longitudinal grooves 63B and 63C, and the lateral groove 65A together constitute a cavity for molding the web 53A, the inner flange 53B, the outer flange 53C, and the rib plate 55, with a molten metal that is caused to flow into the cavity.

As illustrated in FIG. 7 and FIG. 8, after completion of casting, the lower mold 61 and the upper mold 66 are released, and the lower portion 51L, which is a cast product, is removed. The lower portion 51L has a groove shape with the lower side being open and is disposed such that the rib plate 55 extends downward of the vehicle. This configuration allows the lower mold 61 to be drawn downward along the height direction of the inner flange 53B, the outer flange 53C, and the rib plate 55, as indicated by a blank arrow P51 in FIG. 4, FIG. 8, and FIG. 9. Thus, the lower portion 51L is integrally molded by casting.

Similarly, the upper portion 41L of the left beam 31L has a groove shape with the outward side in the vehicle width direction (left side of the vehicle) being open, and the rib plate 47 extends along the vehicle width direction. Therefore, the mold (not shown) for forming the upper portion 41L is drawable outward in the vehicle width direction corresponding to the height direction of the upper flange 43B, the lower flange 43C, and the rib plate 57 (leftward of the vehicle), as indicated by a blank arrow P41 in FIG. 4. Thus, the upper portion 41L is integrally molded by casting.

Similarly, the first cross member 32 is composed of the web 32A, the upper flange 32B, and the lower flange 32C, has a groove shape with the rear side being open, and is disposed such that the rib plate 32D extends rearward of the vehicle. This configuration allows a mold (not shown) for molding the first cross member 32 to be drawn rearward of the vehicle, as indicated by a blank arrow P32 in FIG. 5. Thus, the first cross member 32 is integrally molded by casting.

In addition, the second cross member 33 is composed of the web 33A, the front flange 33B, and the rear flange 33C, has a groove shape with the lower side being open, and is disposed such that the rib plate 33D extends downward of the vehicle. This configuration allows a mold (not shown) for molding the second cross member 33 to be drawn downward, as indicated with a blank arrow P33 in FIG. 5. Thus, the second cross member 33 is integrally molded by casting.

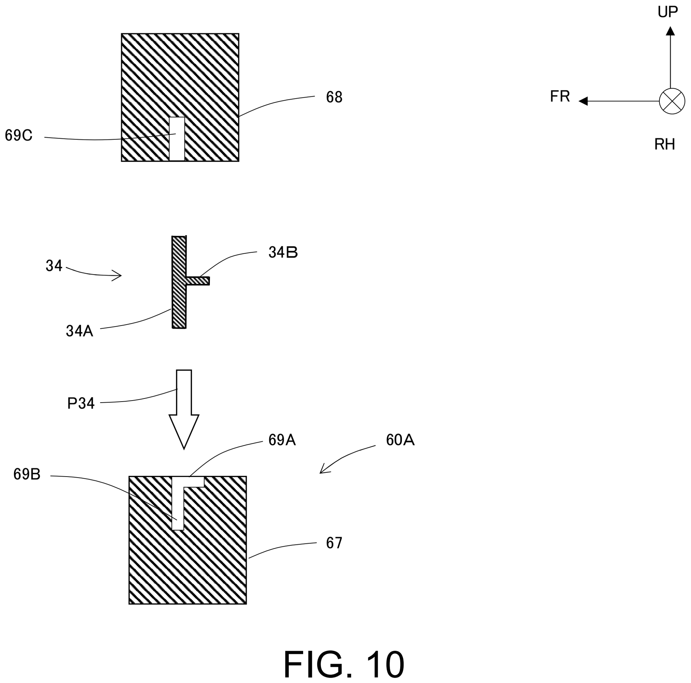

The front cross member 34 is casted with a mold 60A including a lower mold 67 and an upper mold 68. As illustrated in FIG. 10, the lower mold 67 includes a recess 69A for molding the lateral rib 34B and a longitudinal groove 69B for molding a lower portion of the flat plate 34A, and the upper mold 68 includes a longitudinal groove 69C for molding an upper portion of the flat plate 34A. The lower mold 67 is drawn downward along the height direction of the flat plate 34A as indicated by a blank arrow P34 in FIG. 5 and FIG. 10. Thus, the front cross member 34 is integrally molded by casting.

As described above, the molds 60 and 60A are drawn outward in the vehicle width direction, rearward of the vehicle, and downward of the vehicle. This enables the left and right side beams 31L and 31R, the first cross member 32, the second cross member 33, and the front cross member 34 to be integrally molded by casting.

In the suspension member assembly 70 described above, the dynamic rear steering 25 integrally couples the first cross member 32 and the second cross member 33. This configuration increases stiffness of the entire suspension member assembly 70. This configuration further increases torsional stiffness of the suspension member 30 to thereby reduce deformation of the entire suspension member 30.

While in the above description, the dynamic rear steering 25 is described as an assembling member of the suspension member assembly 70, any on-vehicle component other than the dynamic rear steering 25 may be used as the assembling member. Further, the assembling member may be composed of a plate-like member. This configuration reduces the number of components and also increases stiffness of the suspension member assembly 70.

The assembling member may be composed of a plurality of brace members that cross each other to connect opposite end portions of the first and second cross members 32 and 33 in the vehicle width direction. Specifically, the assembling member may be composed of a first brace member that connects the left end portion of the first cross member 32 with the right end portion of the horizontal portion 33H of the second cross member 33, and a second brace member that connects the right end portion of the first cross member 32 with the left end portion of the horizontal portion 33H of the second cross member 33.

In the vehicle rear structure 80, the left and right rearward end portions 37L and 37R of the left and right side beams 31L and 31R, respectively, are located further rearward relative to the front end portions of the left and right crash boxes 14L and 14R. This configuration increases the impact load absorption performance of the vehicle rear structure 80 by enabling the left and right rearward end portions 37L and 37R, along with the left and right crash boxes 14L and 14R, to absorb the impulsive force in the event of rear collision.

Further, in the vehicle rear structure 80, the left and right stabilizer supports 38L and 38R disposed on the undersurfaces of the left and right rearward end portions 37L and 37R, respectively, eliminate the need for additional components for supporting the stabilizer 26, which leads to a reduction in the number of components.

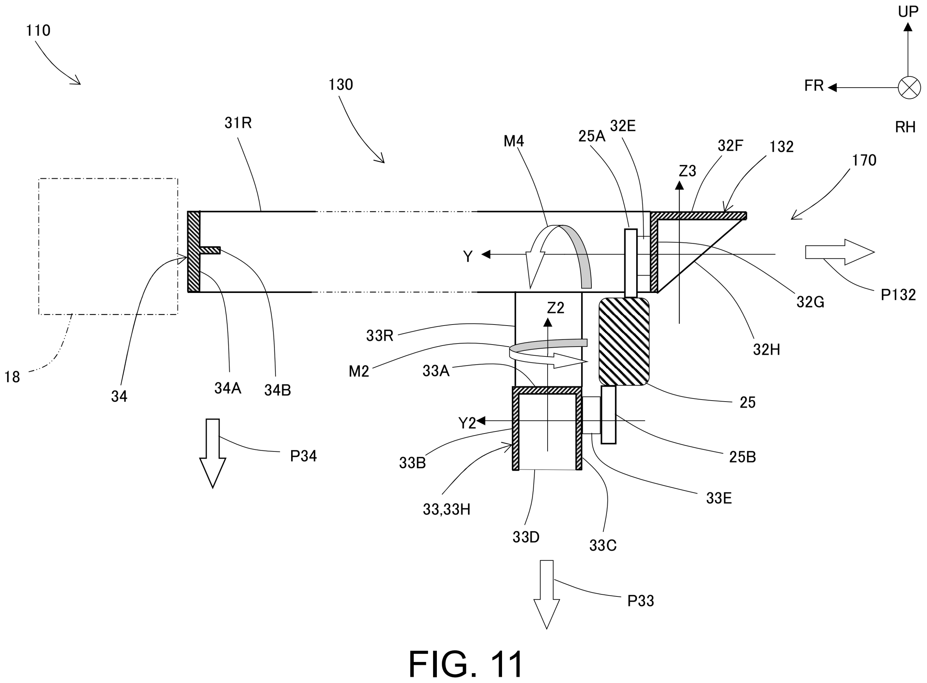

Referring now to FIG. 11, a suspension member assembly 170 according to another embodiment will be described. The suspension member assembly 170 includes a suspension member 130 and a dynamic rear steering 25. The suspension member assembly 170 is mounted on a vehicle 110. In the following description, elements that are the same as the elements of the suspension member assembly 70 and the suspension member 30 described above with reference to FIG. 1 to FIG. 9 are denoted with the same reference numerals and will not be further described.

As illustrated in FIG. 11, the suspension member 130 includes a first cross member 132 that is modified from the first cross member 32 of the suspension member 30 described above with reference to FIG. 1 to FIG. 9 to have a gabled cross section including a horizontal plate 32F extending rearward of the vehicle and a vertical plate 32G extending downward of the vehicle. A rib plate 32H having a triangular shape extends rearward of the vehicle from vertical plate 32G.

As described above, the first cross member 132 has a gabled shape including the horizontal plate 32F and the vertical plate 32G, with the rib plate 32H disposed to extend rearward of the vehicle. The first cross member 132 is integrally formed by casting, by drawing a mold (not shown) for molding the first cross member 132 rearward of the vehicle as indicated by a blank arrow P132 in FIG. 11.

The suspension member 130, similar to the suspension member 30, can therefore be integrally molded by casting, by drawing the mold outward in the vehicle width direction and downward of the vehicle.

The suspension member 130, similar to the suspension member 30, has a groove shape with the lower side being open, and includes the second cross member 33 having a high lateral bending stiffness in the vehicle length direction. This configuration increases stiffness of the entire suspension member 130 to thereby reduce a deformation mode that causes bending of the entire suspension member 130.

### Appendix

The suspension member 30 of the present disclosure may be configured as follows:
(1) The suspension member 30 that is integrally molded by casting and mounted on a rear part of a vehicle body 200, the suspension member 30 comprising:
   left and right side beams 31L, 31R disposed on opposite side portions of a vehicle, respectively, and extending along a length of the vehicle; and
   a plurality of cross members 32, 33, 34 connecting the left and right side beams 31L and 31R in a vehicle width direction, wherein
   each of the left and right side beams 31L and 31R includes an upper portion 41L, 41R and a lower portion 51L, 51R, and
   the lower portion 51L, 51R is curved to protrude downward to create a space 50L, 50R between the lower portion 51L, 51R and the upper portion 41L, 41R.
(2) The suspension member 30 according to (1), wherein
   the upper portion has a groove shape with an outward side in the vehicle width direction being open.
(3) The suspension member 30 according to (2), wherein
   the lower portion 51L, 51R has a groove shape with a lower side being open.
   In the above suspension member 30, the cross members 32, 33, and 34 may have a groove shape, a gabled shape, or a T shape.
   The vehicle rear structure 80 of the present disclosure may be configured as follows:
(4) The vehicle rear structure 80 comprising:
   a rear unit 10 including left and right rear side member portions 11L and 11R disposed on opposite sides of a rear part of the vehicle and extending along a vehicle length;
   left and right crash boxes 14L and 14R mounted on respective rear ends of the left and right rear side member portions 11L and 11R and extending rearward of the vehicle; and
   the suspension member 30 mounted under the rear unit 10, wherein
   the suspension member 30 comprises:
      left and right side beams 31L, 31R disposed on opposite side portions of a vehicle, respectively, and extending along a length of the vehicle; and
      a plurality of cross members 32, 33, 34 connecting the left and right side beams 31L and 31R in a vehicle width direction, wherein
      each of the left and right side beams 31L and 31R includes an upper portion 41L, 41R and a lower portion 51L, 51R,
      the lower portion is curved to protrude downward to create a space between the lower portion and the upper portion,
      the upper portion 41L, 41R has a groove shape with an outward side in the vehicle width direction being open,
      the lower portion 51L, 51R has a groove shape with a lower side being open, and
      rearward end portions 37L and 37R of the respective left and right side beams 31L and 31R are positioned further rearward of the vehicle relative to front end portions of the crash boxes 14L and 14R, respectively.
      In the above vehicle rear structure 80, the cross members 32, 33, 34 may have a groove shape, a gabled shape, or a T shape.

## Claims

1. A suspension member (30) that is integrally molded by casting and mounted on a rear part of a vehicle body (200), the suspension member comprising:
left and right side beams (31L, 31R) disposed on opposite side portions of a vehicle, respectively, and extending along a length of the vehicle;
a first cross member (32) connecting, in a vehicle width direction, vehicle body mounting portions (36L, 36R) of the respective left and right side beams (31L, 31R); and
a second cross member (33) disposed further frontward of the vehicle relative to the first cross member (32) and connecting the left and right side beams (31L, 31R) in the vehicle width direction, wherein
the first cross member (32) has a groove shape with a rear side being open, or a gabled shape including a horizontal plate extending rearward of the vehicle and a vertical plate extending downward of the vehicle, and
the second cross member (33) has a groove shape with a lower side being open.

2. The suspension member (30) according to claim 1, wherein
each of the left and right side beams (31L, 31R) includes an upper portion (41L, 41R) and a lower portion (51L, 51R), and
the lower portion (51L, 51R) is curved to protrude downward to create a space (50L, 50 R) between the lower portion (51L, 51R) and the upper portion (41L, 41R).

3. The suspension member (30) according to claim 2, wherein
the upper portion (41L, 41R) has a groove shape with an outward side in the vehicle width direction being open.

4. The suspension member (30) according to claim 2, wherein
the lower portion (51L, 51R) has a groove shape with a lower side being open.

5. The suspension member (30) according to any one of claims 1 to 4, wherein the second cross member (33) comprises a lower arm mounting portion (39L, 39R) to which a suspension lower arm (21L, 21R) is attached.

6. A suspension member assembly (70) comprising:
the suspension member (30) according to any one of claims 1 to 5; and
an assembling member (25) configured to connect the first cross member (32) and the second cross member (33).

7. The suspension member assembly (70) according to claim 6, wherein
the assembling member (25) is configured to connect opposite end portions of the first cross member (32) in the vehicle width direction on a vehicle forward side with opposite end portions of the second cross member (33) in the vehicle width direction on a vehicle rearward side.

8. The suspension member assembly (70) according to claim 6 or claim 7, wherein, the assembling member (25) is a plate-like member or is composed of a plurality of brace members crossing each other to connect the opposite end portions of the first cross member (32) in the vehicle width direction with the opposite end portions of the second cross member (33) in the vehicle width direction.

9. The suspension member assembly (70) according to any one of claims 6 to 8, wherein,
the assembling member (25) is an on-vehicle component.

10. The suspension member assembly (70) according to claim 9, wherein
the on-vehicle component is a dynamic rear steering (25).

11. A suspension member assembly (70), comprising;
the suspension member (30) according to any one of claims 1 to 5; and
an assembling member (25) configured to connect the first cross member (32) and the second cross member (33), wherein
the second cross member (33) extends from undersurfaces of the respective left and right side beams (31L, 31R) and has a U shape protruding downward, and
the assembling member (25) is configured to connect first and second end portions on a forward face of the first cross member (32) with second and first end portions on a rearward face of the second cross member (33).

12. A vehicle rear structure comprising:
the suspension member (30) according to any one of claims 1 to 5;
a rear unit (10) including left and right rear side member portions (11L, 11R) disposed on a rear part of the vehicle and extending along a vehicle length; and
left and right crash boxes (14L, 14R) mounted on respective rear ends of the left and right rear side member portions (11L, 11R) and extending rearward of the vehicle, wherein
rearward end portions of the respective left and right side beams (31L, 31R) are positioned further rearward of the vehicle relative to front end portions of the crash boxes (14L, 14R).

13. The vehicle rear structure (80) according to any one of claims 11 or 12, wherein stabilizer supports (38L, 38R) are disposed on undersurfaces of the rearward end portions of the left and right side beams (31L, 31R), respectively.
